# EUROPEAN PATENT APPLICATION

(11) **EP 3 378 329 A1**
(43) Date of publication of application: **26.09.2018**
(21) Application number: 16881460.6
(22) Date of filing: 17.06.2016
(51) Int. Cl.: A23K 50/45, A23K 50/00

(54) **PET FOOD COMPOSITION , FOOD GRAINS FOR PET FOOD, PET FOOD, AND PET FOOD PACKAGE**

(30) Priority: 28.12.2015 JP 2015255927
(71) Applicant: Unicharm Corporation, Ehime 799-0111 (JP)
(72) Inventor: NAKASE Koichi, Itami-shi Hyogo 664-0831 (JP); YOSHIDA Kotaro, Itami-shi Hyogo 664-0831 (JP); YAMANISHI Hiroto, Itami-shi Hyogo 664-0831 (JP)
(74) Representative: Dolleymores
(86) International application number: PCT/JP2016/068093
(87) International publication number: WO 2017/115480

(57) **Abstract**

Provided is a pet food composition including: 5% by mass or greater of fats and oils, in which, in measurement values (X) obtained from the following deformation test, a value at 25°C is 0.5 N or greater and a value at 60°C is less than 0.1 N.

Deformation test: An object to be measured is placed on a flat dish, a plunger (having a cylindrical shape with a diameter of 15 mm and a thickness of 5 mm) is pressed against a central portion of the object from above to apply a load thereto, and a stress is measured while the plunger is allowed to move downward at a constant speed. A maximum value of the stress during a period from the contact of the plunger with the object to be measured to the movement of the plunger by a distance of 4 mm is obtained. The measurement is repeatedly performed on three samples, and an average value of the maximum values is acquired. A unit of the obtained average value is converted into newtons (N) and the value is set as the measurement value (X).

## Description

### Technical Field

The present invention relates to a pet food composition, food grains for pet food containing the pet food composition (in the present specification, also simply referred to as food grains), pet food containing the food grains for pet food, and a pet food package containing the pet food.

Priority is claimed on Japanese Patent Application No. 2015-255927, filed on December 28, 2015, the content of which is incorporated herein by reference.

### Background Art

Pet food has been studied in various ways so as to be eaten pleasantly by pets than before, in other words, to improve the palatability.

PTL 1 describes granular pet food whose palatability is improved when heated.

### Citation List

### Patent Literature

[PTL 1] Japanese Patent No. 5752310

### Summary of Invention

### Technical Problem

The granular pet food described in PTL 1 is devised such that softness and flavor of food grains are increased when heated by blending specific processed starch and fats and oils into individual food grains, but the pet food has poor visual characteristics. Therefore, it cannot be said that the pet food appeals (demand boosting) to consumers sufficiently.

An object of the present invention is to provide a pet food composition which is capable of imparting visual characteristics to pet food to be heated before feeding and food grains for pet food, pet food, and a pet food package which are obtained by using the pet food composition.

### Solution to Problem

An embodiment of the present invention has the following configurations.
[1] A pet food composition comprising: 5% by mass or greater of fats and oils, in which, in measurement values (X) obtained from the following deformation test, a value at 25°C is 0.5 N or greater and a value at 60°C is less than 0.1 N,
   deformation test: an object to be measured is placed on a flat dish, a plunger (having a cylindrical shape with a diameter of 15 mm and a thickness of 5 mm) is pressed against a central portion of the object from above to apply a load thereto, a stress is measured while the plunger is allowed to move downward at a constant speed, a maximum value of the stress during a period from the contact of the plunger with the object to be measured to the movement of the plunger by a distance of 4 mm is obtained, measurement is repeatedly performed on three samples, an average value of the maximum values is acquired, and a unit of the obtained average value is converted into newtons (N) and the value is set as the measurement value (X).
[2] The pet food composition according to [1],which contains 5% to 89.5% by mass of fats and oils, 0.5% to 10% by mass of a gelling agent, 10% to 80% by mass of a humectant, and 0% to 35% by mass of water, wherein a total amount of the fats and oils, the gelling agent, the humectant, and the water is in a range of 88% to 100% by mass.
[3] The pet food composition according to [2], in which the gelling agent contains gelatin.
[4] The pet food composition according to [3], in which the gelling agent contains gelatin and agar.
[5] The pet food composition according to any one of [2] to [4], in which the humectant contains glycerin.
[6] The pet food composition according to any one of [2] to [5], in which a content of fats and oils is 50% by mass or greater.
[7] The pet food composition according to any one of [1] to [6], in which a moisture activity is 0.6 or less.
[8] Food grains for pet food, comprising: a thermally melting portion formed of the pet food composition according to any one of [1] to [7], in which at least a part of the thermally melting portion is exposed.
[9] Pet food comprising: the food grains for pet food according to [8].
[10] The pet food according to [9], further comprising: a solid grain in which the measurement value (X) obtained from the deformation test at 60°C is 0.5 N or greater.
[11] The pet food according to [10], in which a dried food grain having a moisture content of 10% by mass or less is provided as the solid grain.
[12] The pet food according to [10] or [11], in which a dried vegetable is provided as the solid grain.
[13] A pet food package, in which the pet food according to any one of [9] to [12] is accommodated in a container formed of an easy-to-peel packaging material.

### Advantageous Effects of Invention

The pet food composition according to an embodiment of the present invention is in a state of a solid which is unlikely to be deformed at room temperature and is melted when heated. In other words, since the visual state is changed when the composition is heated, visual characteristics can be imparted by blending the composition into the pet food to be heated before feeding.

In the food grains for pet food according to an embodiment of the present invention, since the thermally melting portion formed of the pet food composition of the present invention is exposed, a change in state due to heating can be visually recognized. Therefore, visual characteristics can be imparted by blending the food grains into the pet food to be heated before feeding.

The pet food according to an embodiment of the present invention has a visual characteristic in which the food grains are melted when heated.

The pet food package according to an embodiment of the present invention has a visual characteristic in which the food grains are melted when heated. Further, the melted food grains are unlikely to adhere to the inner surface of a container, and thus the pet food is easily taken out from the container after being heated.

### Description of Embodiments

### <Method of measuring moisture content>

In the present invention, the moisture content is obtained according to the following measuring method.

An object to be measured is pulverized using a pulverizer so as to pass through a sieve having an opening diameter of 1 mm and then used as an analytical sample. 2 to 5 g of the analytical sample is accurately weighed, put into an aluminum weighing dish (after the sample is dried in advance, the weight thereof is accurately weighed), dried at a temperature of 135 ± 2°C for 2 hours, and left to be cooled in a desiccator. Next, the weight thereof is accurately weighed, and then the moisture content is acquired from a difference between the weights of the sample weighed before and after the drying.

In the present specification, the moisture content of food grains for pet food is set to a value measured immediately after a pet food product manufactured by accommodating pet food in a packaging container and sealing the packaging container is opened after manufacture within 30 days from the date of manufacture or set to a value measured under conditions similar to the conditions described above.

### <Method of measuring moisture activity>

In the present invention, the moisture activity (Aw) is a value obtained by measurement performed on a sample prepared by pulverizing an object to be measured at a measurement temperature of 25°C using a known moisture activity measuring device.

For example, the measurement can be carried out using a moisture activity measuring device "Novasina IC-500 AW-LAB (trade name, manufactured by DKSH Japan K.K.)".

### <Deformation test on pet food composition (method of measuring measurement value (X)>

An object obtained by solidifying the pet food composition to prepare a sample and adjusting the temperature of the sample is set as an object to be measured.

The object to be measured is placed on a platform, a plunger is pressed against a central portion of the object to be measured from above to apply a load thereto. The stress is measured while the plunger is allowed to move downward at a constant speed. The maximum value of the stress during a period from the contact of the plunger with the object to be measured to the movement of the plunger by a distance of 4 mm is obtained. The measurement is repeatedly performed on three samples, and the average value of the maximum values is acquired. Specifically, the unit of the obtained average value is converted into newtons (N) by multiplying the average value thereof by 9.8 in a case where the unit of the obtained average value is "kgw", and a measurement value (X) (unit: N) is obtained.

### [Measurement conditions]

Measuring device: Shimadzu small desktop testing machine Ez Test (manufactured by Shimadzu Corporation, model No.: EZ-SX, maximum load capacity: 500 N)
Plunger: cylindrical shape having diameter of 15 mm and thickness of 5 mm
Platform: flat dish

Method of preparing sample: 15 mL of the melted pet food composition is poured into a cup that has an opening portion with an inner diameter of 37 mm, a bottom surface with an inner diameter of 31 mm, and a height of 23 mm, allowed to stand still at room temperature (25°C) overnight, and solidified, thereby obtaining a sample.

### [Method of adjusting temperature of sample]

In a case where the measurement temperature is 25°C, the sample (25°C) produced according to the above-described method is set as an object to be measured as it is.

In a case where the measurement temperature is 60°C, the sample produced according to the above-described method is heated in a microwave, confirmed to be heated to 60°C with an infrared radiation thermometer (manufactured by SATO KEIRYOKI MFG. CO., LTD., model No.: SK-8920), set as an object to be measured immediately, and placed on a platform.

In a case where the measurement temperature is 50°C, the sample produced according to the above-described method is kept in an electric oven whose temperature inside is maintained to 50°C so that the temperature of the sample is maintained for 4 hours, set as an object to be measured immediately, and placed on a platform.

### «Pet food composition»

The pet food composition according to the present embodiment (hereinafter, also referred to as a composition (Z)) is a composition containing 5% by mass or greater of fats and oils. The composition in the present embodiment has a uniform composition. For example, a composition formed of an oil phase and a water phase being integrated by being separated into two layers is not included in the range of the composition.

In a case where the content of fats and oils in the composition (Z) is 5% by mass or greater, the effect of improving the palatability by blending the composition (Z) into the pet food is sufficiently obtained. The content of fats and oils is preferably 10% by mass or greater, more preferably 15% by mass or greater, and still more preferably 30% by mass or greater. The content thereof may be 100% by mass.

Particularly, it is preferable that the content of fats and oils in the composition (Z) is 50% by mass or greater from the viewpoint that the composition (Z) has a property of being easily cut when cooled to 10°C or lower and the composition (Z) is easily formed.

The fats and oils contained in the composition (Z) may be used alone or in combination of two or more kinds thereof. In a case where two or more kinds of fats and oils are used, a total amount thereof may be in the above-described range.

The measurement value (X) of the composition (Z) at 25°C during the deformation test is 0.5 N and the measurement value (X) at 60°C is less than 0.1 N. In a case where the measurement value (X) is decreased, this means that the composition has a property of being easily deformed. The measurement value (X) is large in a case where the composition is in a solid state and the measurement value (X) is small in a case where the composition is in a liquid state.

In a case where the measurement value (X) at 25°C is 0.5 N or greater, since the composition is in a solid state in which the composition is unlikely to be deformed at room temperature, the composition can be used by being blended into granular pet food. The measurement value (X) at 25°C is preferably 1 N or greater, more preferably 3 N or greater, and still more preferably 10 N or greater.

In a case where the measurement value (X) at 60°C is less than 0.1 N, the composition enters a state in which the composition is melted at 60°C or a state in which the composition is melted to the extent of being easily deformed due to the external force. The measurement value (X) at 60°C is preferably 0.09 N or less, more preferably 0.08 N or less, and still more preferably 0.07 N or less.

As described above, a difference between the property of the composition (Z) at room temperature and the property of the composition (Z) at 60°C is large, and a change in visual state before and after heating occurs. Therefore, visual characteristics can be imparted by blending the composition (Z) into the pet food to be heated before feeding.

It is preferable that the composition (Z) has heat resistance at 50°C. In the present embodiment, the expression "the composition has heat resistance at 50°C" means that the composition is unlikely to be deformed in an environment of 50°C. In a case where the composition has such heat resistance, storage and distribution can be made without using a cold reserving facility even in summer. Further, in a case where the temperature of the composition (Z) is increased by being heated, the composition has a characteristic of being in a solid state in which the composition is unlikely to be deformed up to a temperature of 50°C and of being thermally melted until the temperature thereof reaches 60°C. Therefore, since the state of the composition (Z) is drastically changed in a temperature range of 50°C to 60°C at the time of heating the pet food in a case where the composition (Z) has been blended into the pet food to be heated before feeding, it is possible to visually recognize that the pet food is heated at an appropriate temperature.

### [Fats and oils]

The fats and oils contained in the composition (Z) may be vegetable fats and oils or animal fats and oils. The fats and oils may be used alone or in combination of two or more kinds thereof.

Examples of the fats and oils include palm oil, beef tallow, lard, chicken fat, milk fat, modified fat, fish oil, linseed oil, safflower oil, sunflower oil, soybean oil, rapeseed oil, corn oil, cottonseed oil, rice oil, olive oil, peanut oil, cacao butter, coconut oil, and palm kernel oil.

From the viewpoint of being solid oil which is in a solid state at room temperature and has excellent shape retainability, it is preferable that the composition contains at least one selected from the group consisting of palm oil, beef tallow, lard, chicken oil, milk fat, cacao butter, coconut oil, palm kernel oil, and modified fat.

### [Gelling agent]

It is preferable that the composition (Z) contains a gelling agent.

Examples of the gelling agent include gelatin, agar, carrageenan, pectin, locust bean gum, xanthan gum, guar gum, gum arabic, taraya gum, karaya gum, alginic acid, tara gum, and starch. These may be used alone or in combination of two or more kinds thereof.

The gelling agent contributes to the shape retainability of the composition (Z).

Since gelatin contributes to emulsification, it is preferable that the composition (Z) contains gelatin from the viewpoint that the amount of an emulsifier to be used can be set to be small or an emulsifier does not need to be used.

Particularly agar contributes to improvement of the shape retainability at 50°C, and thus it is preferable that the composition (Z) contains gelatin and agar.

### [Humectant]

It is preferable that the composition (Z) contains a humectant. A humectant holds the moisture in the composition (Z) and contributes to a decrease in moisture activity. The humectant may be used alone or in combination of two or more kinds thereof.

Examples of the humectant include saccharides, glycerin, sugar alcohol (sorbitol, maltitol, or the like), and propylene glycol.

Examples of the saccharides include sugar, glucose (dextrose), maltose, galactose, sucrose (saccharose), fructose (levulose), and trehalose. The saccharides may be used in the powdery form or in the liquid form (liquid sugar).

From the viewpoint of the palatability, it is preferable that the composition contains at least one selected from the group consisting of saccharides, glycerin, and sugar alcohol. As the saccharides, sugar or liquid sugar is preferable.

In order to efficiently decrease the moisture activity, it is preferable that at least glycerin is used. For example, it is preferable that the humectants in the composition (Z) are sorbitol and glycerin.

### [Water]

It is preferable that the composition (Z) contains water. Water contributes to increasing the temperature of the composition (Z) by being heated in a microwave. Further, water contributes to gelation of a gelling agent.

The water in the composition (Z) may be the moisture contained in ingredients, or water may be added to the composition separately from the ingredients.

Particularly from the viewpoint of easily obtaining excellent meltability when the composition is heated in a microwave, it is preferable that the composition (Z) contains fats and oils, water, a gelling agent, and a humectant. The temperature of the fats and oils is unlikely to be increased when the composition is heated in a microwave, but water generates heat through an interaction with the microwaves.

Accordingly, by allowing fats and oils and water to coexist in the composition (Z), the fats and oils can be melted using heat generated from water when the composition is heated in a microwave. Further, a gelling agent and a humectant contribute to holding the moisture. Therefore, by heating the composition in a microwave in a state in which a gelling agent and a humectant are allowed to be contained in the composition (Z) that contains fats and oils and water so that the water is held, the composition (Z) can be rapidly melted.

### [Other components]

The composition (Z) may contain components other than the fats and oils, the gelling agent, the humectant, and water within the range where the effects of the present invention can be obtained.

Examples of other components include palatability improvers such as an emulsifier, a dairy ingredient, an egg ingredient, and an extract and protein hydrolyzate, a flavoring ingredient, and a coloring ingredient.

In a case where the composition (Z) contains water, an emulsifier suppresses separation of the composition into a water phase and an oil phase. An emulsifier which can be used as a food additive can be used. Examples thereof include sorbitan fatty acid ester, sugar ester, glycerin fatty acid ester, and polyglycerin condensed ricinoleic acid ester. The emulsifier may be used alone or in combination of two or more kinds thereof.

### [Composition of ingredients]

It is preferable that the composition (Z) contains 5% to 89.5% by mass of fats and oils, 0.5% to 10% by mass of a gelling agent, 10% to 80% by mass of a humectant, and 0% to 35% by mass of water and the total amount of the fats and oils, the gelling agent, the humectant, and the water is in a range of 88% to 100% by mass.

It is more preferable that the composition (Z) contains 15.0% to 61.0% by mass of fats and oils, 1.0% to 6.0% by mass of a gelling agent, 28.3% to 65.0% by mass of a humectant, and 9.0% to 22.5% by mass of water and the total amount of the fats and oils, the gelling agent, the humectant, and the water is in a range of 88% to 100% by mass.

It is still more preferable that the composition (Z) contains 15.0% to 25.0% by mass of fats and oils, 3.0% to 6.0% by mass of a gelling agent, 53.5% to 65.0% by mass of a humectant, and 15.0% to 16.5% by mass of water and the total amount of the fats and oils, the gelling agent, the humectant, and the water is in a range of 88% to 100% by mass.

From the viewpoint of easily obtaining excellent meltability using a microwave, it is preferable that the content of components in a solid state at room temperature is not extremely large in the composition (Z). Specifically, it is preferable that the above-described composition is satisfied under a condition that the content of sugar is 38% by mass or less and the content of sorbitol is 40% by mass or less. Further, it is preferable that the above-described composition is satisfied under a condition that the total content of fats and oils and sugar is less than 30% by mass and the content of glycerin is 10% by mass or greater.

In addition, from the viewpoint of easily obtaining excellent heat resistance at 50°C, it is preferable that the above-described composition is satisfied under a condition that the composition (Z) contains gelatin and agar and the content of agar is 0.5% by mass or greater. It is more preferable that the content of agar is 1.5% by mass or greater.

An example of the preferable composition of ingredients in the composition (Z) is as follows.

The content of sorbitol is in a range of 14.0% to 30.0% by mass, the content of glycerin is in a range of 23.5% to 65.0% by mass, the content of water is in a range of 15.0% to 16.5% by mass, the content of gelatin is in a range of 1.5% to 4.5% by mass, the content of agar is in a range of 0.5% to 2.0% by mass, and the content of fats and oils is in a range of 15.0% to 25.0% by mass, and the total content of these ingredients is in a range of 88% to 100% by mass.

Further, from the viewpoints of obtaining excellent meltability using a microwave and excellent forming suitability, it is preferable that the composition (Z) contains 50% to 65% by mass of fats and oils, 1% to 3% by mass of a gelling agent, 20% to 40% by mass of a humectant, and 5% to 20% by mass of water and the total content of the fats and oils, the gelling agent, the humectant, and the water is in a range of 88% to 100% by mass.

From the viewpoint of easily forming the composition, it is preferable that the composition described above is satisfied because the content of fats and oils is high and the composition has a property of being unlikely to be modified and being easily cut when cooled.

### [Moisture activity]

The moisture activity (Aw) of the composition (Z) is preferably 0.87 or less and more preferably 0.80 or less. In a case where the moisture activity (Aw) is 0.87 or less, excellent storability is obtained.

Particularly in a case where the composition (Z) and dried food grains described below are used in combination, the moisture activity (Aw) of the composition (Z) is preferably 0.6 or less. In a case where the moisture activity (Aw) is 0.6 or less, moisture transfer to the dried food grains is satisfactorily prevented.

### <Method of producing pet food composition>

The composition (Z) can be produced according to a method of homogeneously mixing all ingredients and lowering the temperature for solidification. In a case of ingredients in a solid state at room temperature, the ingredients are heated to enter a liquid state and then mixed.

For example, a method of respectively preparing a water phase composition containing water, a gelling agent, and a humectant and an oil phase composition containing fats and oils, mixing the water phase composition and the oil phase composition, homogenizing the mixture, and solidifying the mixture can be used. In order to dissolve the gelling agent, the water phase composition is heated as necessary. Further, in order to melt the fats and oils, the oil phase composition is heated as necessary.

### «Food grains for pet food»

As the form in which the composition (Z) is blended into the pet food, a form in which a change in state of the composition (Z) when heated can be visually recognized is preferable.

For example, a form of food grains (z) which have a thermally melting portion formed of the composition (Z) and in which at least a part of the thermally melting portion is exposed is preferable.

The food grains (z) may be grains formed of only the composition (Z). The food grains (z) formed of only the composition (Z) are obtained by forming the composition (Z) into grains having an appropriate shape and an appropriate size. For example, the composition (Z) can be formed according to a method of forming the composition (Z) into a plate shape and cutting the formed composition into a columnar shape or die-cutting the formed composition.

Since the food grains (z) formed of only the composition (Z) are melted when heated, the size thereof is not particularly limited. From the viewpoint of the effects of imparting visual characteristics, for example, both of the longest diameter and the shortest diameter are preferably in a range of 1 to 20 mm and more preferably in a range of 2 to 15 mm.

Alternatively, the food grains (z) formed such that a cylindrical edible container or the inside of an edible container having a recess is filled with the composition (Z) may be used. The edible container is not particularly limited as long as the container can be eaten by a pet. For example, the edible container can be produced according to a method of forming and burning the ingredient composition used for producing puffed grains or non-puffed grains described below. It is preferable that the edible container has a size suitable for a pet to eat. For example, both of the longest diameter and the shortest diameter are preferably in a range of 3 to 30 mm and more preferably in a range of 5 to 20 mm.

### «Pet food»

The pet food according to the present embodiment contains the food grains (z). The pet food may be formed of only the food grains (z) or may contain grains other than the food grains (z).

It is preferable that the pet food according to the present embodiment is pet food to be heated before feeding. The heating means is not limited, but pet food to be heated in a microwave before feeding is more preferable. The temperature of the pet food when the heating is finished is preferably higher than 50°C and 65°C or lower and more preferably in a range of 55°C to 60°C.

It is preferable that the grains other than the food grains (z) include solid grains in which the measurement value (X) at 60°C is 0.5 N or greater. The expression "the measurement value (X) is 0.5 N or greater" means that the grain is in a state of a solid which is unlikely to be deformed. The measurement value (X) of the solid grain at 60°C is preferably 1 N or greater, more preferably 3 N or greater, and still more preferably 10 N or greater.

Examples of the solid grains include dried food grains having a moisture content of 10% by mass or less, semi-moist food grains having a moisture content of greater than 10% by mass, dried vegetables, dried meat, and dried seafood.

In the pet food containing such solid grains and the food grains (z), since the food grains (z) are melted when heated and enter a liquid state and the liquid is entangled with the solid grains, the palatability of the solid grains is improved and the appearance of the solid grain becomes more delicious.

The dried food grains may be puffed grains or non-puffed grains.

The "puffed grains" indicate grains obtained by forming an ingredient mixture into a granular shape and also indicate grains obtained by performing a puffing process of foaming inside the ingredient mixture. The "puffing process" indicates a process of generating a gas in the ingredient mixture using a technique of carrying out heating, fermentation, a chemical reaction, or pressure reduction. In the puffing process, as a gas is generated, the volume of the ingredient mixture is increased so as to have porous properties. Further, as the volume of the ingredient mixture is increased, the bulk density thereof is decreased. Before, after, or at the same time with the puffing process, "puffed grains" are obtained by forming the ingredient mixture in a granular shape. The "non-puffed grains" indicate grains produced without performing the puffing process.

It is preferable that the surface of respective dried food grains is provided with a coating layer containing fats and oils and/or a palatability improver.

In a case of the dried food grains, a change in state when heated is small. Accordingly, the effect of improving visual appeal using a combination of the dried food grains with the food grains (z) is particularly large.

The moisture content of semi-moist food grains is preferably in a range of 15% to 30% by mass and more preferably in a range of 20% to 30% by mass. Further, the moisture activity (Aw) of semi-moist type food grains is preferably in a range of 0.60 to 0.87 and more preferably in a range of 0.70 to 0.80.

The semi-moist food grains may be puffed grains or non-puffed grains.

It is preferable that the surface of the semi-moist food grain is provided with a coating layer containing fats and oils and/or a palatability improver.

Dried vegetables are obtained by cutting ingredient vegetables, performing a pre-treatment for drying on the vegetables as necessary, and drying the treated vegetables. Although the dried vegetables are preferred by health-oriented consumers, it is difficult to obtain excellent palatability for pets. In a case where dried vegetables and the food grains (z) are used in combination, since the food grains (z) are melted and enter a liquid state when heated and the liquid is entangled with the dried vegetables, the palatability of the dried vegetables is improved. Further, the dried vegetables become colorful and the appearance thereof becomes more delicious.

In the pet food containing the food grains (z) and solid grains other than the food grains (z), the content of the food grains (z) is not particularly limited, but the content thereof is preferably 3% by mass or greater, more preferably 5% by mass or greater, and still more preferably 8% by mass or greater with respect to the total content of the pet food, from the viewpoint of sufficiently imparting the visual characteristics. The upper limit thereof is not particularly limited and can be set by considering the nutritional balance or the like. In a case of the comprehensive nutritional diet for the pet food, the content of the food grains (z) is preferably 30% by mass or less, more preferably 25% by mass or less, and still more preferably 10% by mass or less. The content thereof may be zero.

### <<Pet food package>>

The form of a pet food product according to the present embodiment is not particularly limited, but a form of a pet food package formed by accommodating the pet food in a container formed of an easy-to-peel packaging material is preferable. Since the easy-to-peel packaging material has excellent release properties, adhesion of the melted food grains (z) to the inner surface of the container is suppressed. Therefore, the total amount of the heated pet food can be smoothly taken out from the container.

Known materials can be suitably used as the easy-to-peel packaging material.
A material having heat resistance is preferable. A material which can be heated in a microwave is preferable.

Preferred examples of the material include a polymer blend of an ethylene-propylene random copolymer and linear low density polyethylene (LLDPE); a polymer blend obtained by combining a polypropylene-based resin and high density polyethylene, low density polyethylene, or an ethylene-vinyl acetate copolymer; a polymer blend, for example, random PP, PE, or PS such as polypropylene (PP) and polyethylene (PE) or polystyrene (PS) and polyethylene (PE); and a CF film (TORAY ADVANCED FILM CO., LTD.) of a special polymer composite containing a polyethylene-based polymer as a base.

The shape of the container is not particularly limited. For example, the shape thereof may be a bag shape or a shape obtained by heat-sealing an opening portion of a bowl-shaped container with a packaging film.

It is preferable that the pet food package is formed such that an amount of pet food to be used in one occasion is accommodated in a container. An amount to be used in one occasion indicates an amount of pet food to be used up in one feeding, that is, one feeding amount or an amount of pet food obtained by subdividing a part thereof.

It is preferable that the container is provided with a note related to heating immediately before feeding. The note may be related to a heating method or a heating condition in which the temperature of the pet food is set to be a preset target temperature. Specifically, the note may be related to the time for immersing the pet food in boiling water according to a heating method using a water bath. Alternatively, the note may be related to a rated high frequency output (wattage) according to a heating method using a microwave.

### Examples

The present invention will be described in detail with reference to the examples described below, but the present invention is not limited thereto.

### [Production Example 1: production of dried food grains]

71 parts by mass of cereals, 24 parts by mass of meat, and 5 parts by mass of other additives were mixed. The obtained ingredient mixture was put into an extruder and subjected to a heat treatment at approximately 115°C for approximately 2 minutes while kneading, a starch component was pregelatinized, and the mixture was puffed simultaneously with being extruded and granulated in a granular shape in an outlet of the extruder. The kneaded material was extruded from a (circular) hole having a diameter of 5.3 mm in a columnar shape in the outlet of the extruder, the columnar material was cut using a cutter such that the thickness thereof was set to 4 mm, thereby obtaining a granulated material.

After the obtained granulated material was subjected to a drying treatment at approximately 100°C for approximately 30 minutes using a drier, the granulated material was coated with an external additive (a mixture of fats and oils and a palatability improver), and dried food grains were obtained.

The moisture content of the obtained dried food grains was 8% by mass. Further, the hardness of the grains was not almost changed even in a case where the grains were heated at 60°C, and thus the measurement value (X) at 60°C is assumed to 300 N or greater.

### [Examples 1 to 12: production of food grains formed of pet food composition]

A composition (Z) was prepared with the formulation listed in Table 1.

Ingredients of a water phase composition were mixed at 90°C, and a gelling agent was allowed to be dissolved therein. Apart from this, ingredients of an oil phase composition were mixed at 60°C, and fats and oils were allowed to be dissolved therein. The oil phase composition (60°C) was added to the obtained water phase composition little by little while the temperature of the water phase composition was maintained to 90°C, and the mixture was homogenized using a high-pressure homomixer, thereby obtaining a composition (Z). The obtained composition (Z) was poured into a mold, cooled to 4°C, formed into a plate shape, and cut into a square column shape using a kitchen knife. In this manner, food grains formed of the composition (Z) having a length of 10 mm, a width of 10 mm, and a height of 10 mm were obtained.

The measurement values (X) of the obtained food grains at 25°C and 60°C and the moisture activity thereof were measured according to the above-described methods. Further, the meltability using a microwave and the heat resistance at 50°C were evaluated according to the following methods. The results are listed in Table 1.

### [Example 13: Production of food grains in comparative example]

The present example is an example in which food grains were produced without using a water phase composition.

Fats and oils which were completely dissolved in sugar at 60° were added to the formulation listed in Table 1, and the mixture was sufficiently stirred to be mixed. The obtained oil phase composition was poured into a mold, cooled, and cut in the same manner as in Example 1, thereby obtaining food grains having the same shape as in Example 1. The measurement and the evaluation were performed in the same manner as in Example 1. The results are listed in Table 1.

### <Method of evaluating meltability using microwave>

The food grains obtained in each example were heated such that the temperature of food grains was set to 60°C using a 500 W microwave. The melting state of heated food grains was visually observed and evaluated based on the following standard.
5: The food grains were completely dissolved to a liquid state.
4: The food grains were dissolved to a liquid state as a whole, but the melting degree was not high.
3: The food grains were partially dissolved to a liquid state, but the solid content remained.
2: The surface of the food grain was slightly melted.
1: The food grains were not melted at all.

### <Method of evaluating heat resistance at 50°C>

The food grains obtained in each example were kept in an electric oven whose temperature inside was maintained to 50°C such that the temperature of food grains was maintained for 4 hours. The food grains were taken out from the electric oven, and the shape retainability of the food grains was visually observed and evaluated based on the following standard.
5: The food grains were not deformed nor melted.
4: The surface of the food grain was slightly melted.
3: The food grains were partially deformed and melted. More than half of the food grains maintained the shape.
2: The food grains were partially deformed and melted. Less than half of the food grains maintained the shape.
1: The food grains were completely deformed and melted.

### <Evaluation of palatability (1) of pet food after being heated in microwave>

The effects of improving the palatability (biting properties) when the food grains formed of the composition (Z) obtained in Example 1, 4, 8, 9, or 10 were blended into pet food were evaluated. The results are listed in Table 1.

90 parts by mass of dried food grains obtained in Production Example 1 were mixed with 10 parts by mass of food grains obtained in each example to produce pet food P.

The palatability was evaluated according to a method for comparing the ingested amounts using a combination of pet food Q formed of only the dried food grains obtained in Example 1 and the pet food P. The test was performed for 2 days by monitoring 20 dogs. Each pet food was fed immediately being heated to 60°C in a 500 W electric microwave.

On the first day, a predetermined amount of pet food P and pet food Q was were fed to each dog at the same time, one from the left side and the other from the right side. The amount of pet food eaten by a dog was measured at the time when the dog had eaten all of pet food P or pet food Q, or after one hour.

The ratio between the ingested amount of pet food P and the ingested amount of pet food Q (P:Q, P + Q = 100%) was acquired in percentages based on the total mass of the pet food eaten by one dog during the first day. The percentages obtained from the number of dogs that had been monitored were averaged and set as the result for the first day.

On the second day, contrary to the first day, pet food P and pet food Q were fed to each dog at the same time, one from the left side and the other from the right side. The rest of the procedures were the same as those of the first day and the result of the second day was obtained.

The results of the first and second days were averaged, and the ratio "P:Q" between the ingested amount of pet food P and the ingested amount of pet food Q was acquired. As the numerical value of P or Q is high, this indicates that the dog that was monitored pleasantly ate the pet food.

As the numerical value of P is high, this means that the effects of improving the palatability by blending the food grains formed of the composition (Z) are high.

The ratios of the values of P in each example in a case where the value of P in the evaluation of the palatability (1) in Example 1 was set to 100% are listed in the table.

### <Evaluation of palatability (2) of pet food after being heated in microwave>

A difference in palatability (biting properties) of pet food caused by a difference in composition between the compositions (Z). The results are listed in Table 1.

90 parts by mass of dried food grains obtained in Production Example 1 were mixed with 10 parts by mass of food grains obtained in Example 13 to produce pet food P.

Further, 90 parts by mass of dried food grains obtained in Production Example 1 were mixed with 10 parts by mass of food grains obtained in Example 1 to produce pet food Q.

The palatability was evaluated in the same manner as the evaluation of the palatability (1) described above.

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Ingredient mixture [% by mass] | Water phase composition | Humectant | Liquid sugar | 22.5 | - | - | - | - | - | - | - | - | - | - | - | - |
| | | | Sorbitol | - | 17.5 | 15.7 | 21.0 | 21.0 | 28.0 | 14.0 | 21.0 | - | 10.3 | 44.9 | 51.3 | - |
| | | | Glycerin | 42.5 | - | - | 42.5 | 41.65 | 25.5 | 32.3 | 9.5 | 28.3 | - | - | 4.3 | - |
| | | Water | | 15.0 | 22.5 | 21.7 | 16.5 | 16.35 | 16.5 | 21.7 | 12.5 | 9.0 | 19.2 | 27.9 | 22.7 | - |
| | | Gelling agent | Gelatin | 3.0 | 2.0 | 1.5 | 3.0 | 4.5 | 3.0 | 1.5 | 1.5 | 0.5 | 3.0 | 1.5 | 4.5 | - |
| | | | Agar | - | - | 0.5 | 2.0 | 1.5 | 2.0 | 0.5 | 0.5 | 0.5 | - | 0.5 | 1.5 | - |
| | | Emulsifier | | - | - | - | - | - | - | - | - | 0.5 | - | - | 0.5 | - |
| | Oil phase composition | Fats and oils | | 15.0 | 28.3 | 24.7 | 15.0 | 15.0 | 25.0 | 30.0 | 55.0 | 61.0 | 28.1 | 24.6 | 15.0 | 35.0 |
| | | Emulsifier | | 2.0 | 0.7 | 0.5 | - | - | - | - | - | 0.2 | 1.0 | 0.6 | 0.2 | - |
| | | Humectant | Sugar | - | 29.0 | 35.4 | - | - | - | - | - | - | 38.4 | - | - | 65.0 |
| | Total amount | | | 100.0 | 100.0 | 100.0 | 100.0 | 100.0 | 100.0 | 100.0 | 100.0 | 100.0 | 100.0 | 100.0 | 100.0 | 100.0 |
| Physical property value and evaluation | 25°C | Measurement value (X) [N] | | 3.335 | 3.264 | 21.916 | 31.029 | 15.618 | 14.035 | 13.989 | 31.029 | 43.432 | 14.803 | 15.549 | 20.910 | 337.510 |
| | 60°C | Measurement value (X) [N] | | 0.016 | 0.016 | 0.020 | 0.016 | 0.020 | 0.013 | 0.029 | 0.069 | 0.020 | 0.026 | 0.039 | 0.020 | 0.943 |
| | | Meltability using microwave | | 5 | 4 | 4 | 5 | 5 | 5 | 4 | 4 | 4 | 3 | 2 | 3 | 1 |
| | 50°C | Heat resistance at 50°C | | 2 | 2 | 5 | 5 | 5 | 3 | 5 | 5 | 4 | 2 | 5 | 5 | 5 |
| | Moisture activity (Aw) | | | 0.519 | - | 0.748 | 0.519 | 0.519 | 0.544 | 0.613 | 0.578 | 0.434 | - | 0.751 | 0.662 | - |
| | Palatability (1) | P:Q (Q was formed of only dried food grains) | | 60:40 | - | - | 69:31 | - | - | - | 71:29 | 69:31 | 44:56 | - | - | - |
| | | Relative value in case where value of P in Example 1 was set to 100% | | 100% | - | - | 115% | - | - | - | 118% | 115% | 74% | - | - | - |
| | Palatability (2) | P:Q (Q was pet food obtained in Example 1) | | - | - | - | - | - | - | - | - | - | - | - | - | 42:58 |

As shown in the results listed in Table 1, the food grains of Examples 1 to 12 are in a solid state in which the measurement value (X) at 25°C is 0.5 N or greater and is in a melted state in which the measurement value (X) at 60°C is less than 0.1 N. This means that the food grains of Examples 1 to 12 exhibit thermal meltability. Therefore, a visual state change occurs when the food grains are heated, and visual characteristics can be imparted by blending the food grains into pet food to be heated before feeding.

Particularly the food grains obtained in Examples 1 to 9 had excellent meltability when heated in a microwave. In the case of the food grains of Examples 1, 4, 8, and 9, the palatability of the pet food after being heated was improved.

Further, in the food grains of Example 8, since the content of fats and oils was relatively large and the content of glycerin was relatively small, the measurement value (X) at 60°C was relatively high even in a case where the food grains were melted to a liquid state as a whole at 60°C.

In a case of the food grains of Example 10, the solid content remained when the food grains were heated in a microwave, and the palatability of the heated pet food was the same as the palatability of the pet food Q formed of only dried food grains.

The food grains of Example 13 were in a state of a solid which was not melted even at 60°C, and thus the meltability using a microwave was poor. As shown in the results obtained by evaluating the palatability (2), the palatability of the heated pet food of Example 1 was slightly superior to the palatability of the food grains of Example 13 even though the content of fats and oils in the food grains of Example 13 was higher than the content of fats and oils in the food grains of Example 1. Based on these findings, it was considered that the palatability of dried food grains was improved in a case where the food grains of Example 1 were melted when heated and were adhered to the dried food grains.

In the food grains of Examples 8 and 9, deformation was unlikely to occur particularly when a formed product obtained by cooling the composition (Z) to 4°C was cut, and formability was excellent.

Hereinbefore, preferred examples of the present invention have been described, but the present invention is not limited thereto. Additions, omissions, substitutions, and other modifications of configurations can be within the range not departing from the scope of the present invention. Further, the present invention is not limited by the foregoing description and only limited by the scope of the appended claims.

## Claims

1. A pet food composition comprising:
5% by mass or greater of fats and oils,
wherein, in measurement values (X) obtained from the following deformation test, a value at 25°C is 0.5 N or greater and a value at 60°C is less than 0.1 N,
deformation test: an object to be measured is placed on a flat dish, a plunger (having a cylindrical shape with a diameter of 15 mm and a thickness of 5 mm) is pressed against a central portion of the object from above to apply a load thereto, a stress is measured while the plunger is allowed to move downward at a constant speed, a maximum value of the stress during a period from the contact of the plunger with the object to be measured to the movement of the plunger by a distance of 4 mm is obtained, measurement is repeatedly performed on three samples, an average value of the maximum values is acquired, and a unit of the obtained average value is converted into newtons (N) and the value is set as the measurement value (X).

2. The pet food composition according to claim 1,
which comprises 5% to 89.5% by mass of fats and oils, 0.5% to 10% by mass of a gelling agent, 10% to 80% by mass of a humectant, and 0% to 35% by mass of water are contained,
wherein a total amount of the fats and oils, the gelling agent, the humectant, and the water is in a range of 88% to 100% by mass.

3. The pet food composition according to claim 2,
wherein the gelling agent contains gelatin.

4. The pet food composition according to claim 3,
wherein the gelling agent contains gelatin and agar.

5. The pet food composition according to any one of claims 2 to 4,
wherein the humectant contains glycerin.

6. The pet food composition according to any one of claims 2 to 5,
wherein a content of fats and oils is 50% by mass or greater.

7. The pet food composition according to any one of claims 1 to 6,
wherein a moisture activity is 0.6 or less.

8. Food grains for pet food, comprising:
a thermally melting portion formed of the pet food composition according to any one of claims 1 to 7,
wherein at least a part of the thermally melting portion is exposed.

9. Pet food comprising:
the food grains for pet food according to claim 8.

10. The pet food according to claim 9, further comprising:
a solid grain in which the measurement value (X) obtained from the deformation test at 60°C is 0.5 N or greater.

11. The pet food according to claim 10,
wherein a dried food grain having a moisture content of 10% by mass or less is provided as the solid grain.

12. The pet food according to claim 10 or 11,
wherein a dried vegetable is provided as the solid grain.

13. A pet food package,
wherein the pet food according to any one of claims 9 to 12 is accommodated in a container formed of an easy-to-peel packaging material.
